# EUROPEAN PATENT APPLICATION

(11) **EP 2 175 406 A1**
(43) Date of publication of application: **14.04.2010**
(21) Application number: 07791683.1
(22) Date of filing: 31.07.2007
(51) Int. Cl.: G06Q 30/00, H04M 3/42, H04M 11/08

(54) **INFORMATION MANAGEMENT METHOD, INFORMATION MANAGEMENT APPARATUS, INFORMATION MANAGEMENT PROGRAM, AND CALL ACCEPTANCE APPARATUS**

(71) Applicant: Comsquare Co., Ltd., Tokyo 135-0043 (JP)
(72) Inventor: UESHIMA, Yasushi, Tokyo 135-0043 (JP)
(74) Representative: Staudt, Hans-Peter
(86) International application number: PCT/JP2007/064999
(87) International publication number: WO 2009/016740

(57) **Abstract**

Disclosed are an information management method, an information management device, an information management program, and a call receiving device that allow for the effective use and the prevention of depletion of identification information resources by dynamically allocating identification information indicating a phone number in a Pay-Per-Call system to individual items of advertisement information and enabling the reuse of the identification information.

This information management method is an information management method for managing identification information 11a-11c that is explicitly or implicitly provided in a web page and identifies a call receiver, the method includes a step to change the status of the identification information 11a-11c rendered available for a call connection to an advertiser's phone 7 from being available for sending to advertisement providing servers 5a-5c hosting the web page into being unavailable for sending, a step to change the status of the identification information 11a-11c rendered unavailable for sending into being available for a call connection to a call receiver separate from the advertiser's phone 7, and a step to change the status of the identification information 11a-11c rendered available for a call connection to another call receiver into being available for sending to the web server or other web servers.

## Description

### Technical Field

The present invention relates to an information management method, an information management device, an information management program, and a call receiving device, and particularly relates to an information management method, etc. that can make effective use of information resources by reusing identification information in a Pay-Per-Call system.

### Background Art

Pay-per-click systems have been used as one method of advertising using web pages on the Internet. A pay-per-click system is a system in which an advertising agency charges an advertisement fee to an advertiser according to the number of times an item of advertisement information displayed on a web page is clicked.

For example, when advertisement information of the advertiser is posted on a web page of an advertisement providing site and a user who has viewed the page selects (clicks) the advertisement information, the advertisement information is linked to a website managed by the advertiser and the user can view detailed information regarding the advertisement information. In addition, according to the number of clicks made on the advertisement information, the advertiser pays an advertisement fee to the administrator of the portal site.

This method is frequently used in portal (entrance) sites that have many users (viewers) and are capable of providing high advertising effectiveness. The administrator of the portal site establishes frames for advertisements as part of the site page, runs advertisements by lending the frames for advertisements to advertisers, and collects advertisement fees according to the number of clicks made on each item of advertisement information.

However, this pay-per-click system has a problem in that, when an advertiser does not have their own site, no site can be set to be linked to and no detailed information regarding the advertisement information can be provided. Moreover, because payment of an advertisement fee is generated simply through clicks made on advertisement information, "direct contact with users (clients)" cannot be obtained as the effect for the cost of advertising.

Moreover, because the advertisement fee is generated according to the number of clicks made even when a user unintentionally clicks the advertisement information or intentionally repeats clicking, the association between the advertising effectiveness and the advertisement fee may be decreased.

Therefore, another system has been suggested in which a phone number corresponding to each advertiser is posted on a web page of an advertisement providing site along with the advertisement information, and when a user who has seen the information calls the advertiser, an advertisement fee is charged based on the establishment of the phone call. One of the systems using this advertising method is referred to as a Pay-Per-Call system, such as the one described in Patent Document 1, for example.

However, when posting advertisement information on a plurality of advertisement providing sites, if all of the posted phone numbers are uniformly the same phone numbers, it is impossible to distinguish which advertisement providing site the user has seen to make the phone call. Therefore, there is a problem in that it is impossible to ascertain which advertisement providing sites have a high advertising effectiveness and which advertisement providing sites have a low advertising effectiveness.

Therefore, another method has been suggested in which different phone numbers are allocated for each item of advertisement information and posted on different advertisement providing sites in order to ascertain, based on the phone number the user calls, which advertisement providing site the user has seen to make the phone call (e.g., see Patent Document 2). According to this method, the advertising effectiveness of each advertisement providing site can be ascertained

Patent Document 1: Japanese Published Unexamined Application No. 2005-115945
Patent Document 2: International Publication Brochure No. 2007/015531

### Disclosure of the Invention

### Problems to be Solved by the Invention

Today, there are many advertisement providing sites. For example, when an advertiser posts advertisement information of their company on 10,000 advertisement providing sites, if different phone numbers are allocated to each of these sites and posted, it is necessary to prepare 10,000 numbers, which is a large number of phone numbers.

Moreover, advertisement information of a plurality of items of merchandise (subjects of advertisements, such as products and services) may be posted in one advertisement providing site. Supposing that the advertiser posts advertisement information for 10,000 types of merchandise in one advertisement providing site and allocates different phone numbers to each item of merchandise, it is necessary to prepare 100,000,000 phone numbers for 10,000 sites × 10,000 items of merchandise.

In this way, to allocate different phone numbers to each of many advertisement providing sites and items of merchandise, it is necessary to have phone numbers with a large number of digits. However, if the number of digits of the phone number is increased, the frequency of misdialing by users making a phone call will increase and the number of users who give up making the call due to the complexity of the process will increase, leading to declined advertising effectiveness. Depending on the specifications on the side of the call receiving system, there are restrictions on the number of phone number digits that may be allocated to advertisement information, and it may not be possible to readily increase the number of digits.

Moreover, the number of advertisement providing sites on which the advertiser posts the advertisement information and the number of items of merchandise handled may vary, and it is therefore necessary to ensure a generous number of phone numbers for each of the advertisers (or each of the advertisement providing sites). In this way, even if the number of digits of the phone numbers is increased, the phone number resources are soon depleted and it is necessary to further increase the number of digits of the phone numbers to secure the necessary number of phone numbers for each of the advertisers.

The present invention has been devised upon consideration of the above situation and includes an exemplary problem of providing an information management method, an information management device, an information management program, and a call receiving device allowing for the effective use and the prevention of depletion of identification information resources by dynamically allocating identification information indicating a phone number in a Pay-Per-Call system to individual items of advertisement information and enabling the reuse of the identification information.

### Means of Solving the Problems

In order to solve the above problems, an information management method related to an exemplary aspect of the present invention is an information management method to manage identification information that is explicitly or implicitly provided in a web page and identifies a call receiver, the method include a step to change the status of identification information rendered available for a call connection to a first call receiver from being available for sending to a web server hosting the web page into being unavailable for sending, a step to change the status of the identification information rendered unavailable for sending into being available for a call connection to a second call receiver, and a step to change the status of the identification information rendered available for a call connection to the second call receiver into being available for sending to the web server or other web servers.

Because the status of the identification information rendered available for a call connection to the first call receiver is changed from being available for sending to the web server to being unavailable for sending, and then rendered available for a call connection to the second call receiver and rendered available for sending to the web server or other web servers, different call receivers may be dynamically connected to one identification information. Therefore, this method may contribute to the effective use and prevention of depletion of identification information.

Herein, "explicitly or implicitly provided in a web page" includes cases in which identification information is explicitly displayed as character information on a web page. It also includes situations in which the information is not explicitly displayed on a web page but is internally associated with data of that web page and may be explicitly provided based on some manipulation of the web page and in which it is possible to make a call to a call receiver associated with the identification information.

Identification information is information that identifies a call receiver by being associated with the call receiver and is composed of numbers with multiple numbers of digits, for example. The identification information is also associated with advertisement information, for example, and different identification information may be allocated to each item of advertisement information.

The status in which the identification information is available for sending to a web server refers to a status in which, for example, when the user accesses a web page, the identification information associated with the advertisement information may be sent to the web server and displayed on the web page. "The status in which the identification information is available for a call connection to a first call receiver" refers to a status in which a call based on the identification information may be connected to the first call receiver.

The step to Change the status of identification information from being available for sending to the web server into being unavailable for sending may be executed based on the establishment of a first predefined condition.

The establishment of the first predefined condition includes fulfillment of a certain period and fulfillment of a certain number of times, for example. For example, in cases in which the identification information is rendered unavailable for sending to the web server based on the fulfillment of a certain period, the identification information may be rendered available for provision at the web server for only a certain period and subsequently rendered unavailable for provision at the web server.

Then, the identification information rendered unavailable for provision is rendered available for a call connection to a second call receiver different from the first call receiver and may be provided to the web server, and one item of identification information may thereby be associated with various call receivers at staggered times and the identification information may be effectively reused.

On the other hand, if the identification information and the advertisement information are mutually associated, the identification information to be associated with one item of advertisement information may be changed in various ways at staggered times. Therefore, by ascertaining which item of identification information the call from the user was based on, it is possible to ascertain the period of time or time zone in which that advertisement information is exerting a high advertising effectiveness.

The method may further includes a step to change the status of the identification information into being unavailable for a call connection to the first call receiver after a predefined period has elapsed following the execution of the step to change the status of the identification information from being available for sending to the web server into being unavailable for sending. Then, that predefined period may be extended or reduced based on the establishment of a second predefined condition.

The establishment of the second predefined condition includes, for example, the presence or absence of calls based on the identification information within that predefined period. That is, if there is a call based on the identification information within the predefined period, the predefined period may be extended, and if there is no call, the predefined period may be reduced. In this way, even if the identification information is no longer provided to the web page, the advertising effectiveness of the advertisement information associated with that identification information will still remain, and if a call based on that identification information is sometimes made, a period (predefined period) available for properly connecting that call to the first call receiver may be extended.

In addition, herein, "unavailable for a call connection" refers to rendering a call based on that identification information unconnected to the call receiver. That is, it refers to a situation in which, even if there is a call based on the identification information, that call is not caused to be received by the call receiver by processing it to be busy, placing it on hold, or processing a response announcement that the connecting destination does not exist.

A period unavailable for connection which is from the execution of the step to change the status of the identification information into being unavailable for a call connection to the first call receiver to the execution of changing the status into being available for a call connection to the second call receiver may be extended or reduced based on the establishment of a third predefined condition.

The establishment of the third predefined condition includes the presence or absence of calls based on the identification information within that period unavailable for connection, for example. Specifically, if there is a call based on the identification information within the period unavailable for connection, the period unavailable for connection may be extended, and if there is no call, the period unavailable for connection may be reduced. In this way, even if the identification information has not been provided to the web page for a long period, the advertising effectiveness of the advertisement information associated with that identification information will still remain, and if a call based on that identification information is sometimes made, a period in which the call is unconnected without making a connection to a new second call receiver for a while may be extended.

An information management device related to another exemplary aspect of the present invention is an information management device to manage identification information that is explicitly or implicitly provided in a web page and identifies a call receiver, wherein the information management device changes the status of the identification information rendered available for a call connection to a first call receiver from being available for sending to the web server hosting said web page into being unavailable for sending, changes the status of the identification information rendered unavailable for sending into being available for a call connection to a second call receiver, and changes the status of the identification information rendered available for a call connection to the second call receiver into being available for sending to the web server or other web servers.

Because the status of the identification information rendered available for a call connection to the first call receiver is changed from being available for sending to the web server to being unavailable for sending and then rendered available for a call connection to the second call receiver and rendered available for sending to the web server or other web servers, different call receivers may be dynamically connected to one identification information. Therefore, this method may contribute to the effective use and the prevention of depletion of identification information.

The device may further includes a connection-status changing part that changes the status of the identification information into being unavailable for a call connection to the first call receiver, and changes the status of the identification information into being available for a call connection to the second call receiver, a call-reception-information receiving part that receives call-reception information indicating that there was a call based on the identification information, and a period changing part that, if receiving the call-reception information within a predefined period between changing the status of the identification information into being unavailable for said sending and changing the status into being unavailable for a call connection to the first call receiver, extends the predefined period, and if receiving the call-reception information within a period unavailable for connection between changing the status of the identification information into being unavailable for a call connection to the first call receiver and changing the status into being available for a call connection to the second call receiver, extends the period unavailable for connection.

With the operation of the period changing part, even if the identification information is no longer provided to the web page, depending on the degree of remaining advertising effectiveness of the advertisement information associated with that identification information, a period (predefined period) in which a call based on that identification information can be properly connected to the first call receiver may be extended, or a period in which that call is unconnected (period unavailable for connection) may be extended.

An information management device related to still another exemplary aspect of the present invention includes a management-information acquisition part for acquiring management information for identifying advertisement information provided in a web page from the web server hosting the web page, a first determination part for determining whether identification information for identifying a call receiver and the acquired management information are mutually associated, a second determination part for determining whether said identification information is available for provision to the web server, and an identification-information sending part that sends the identification information to the web server if the identification information is mutually associated with the management information and available for the provision.

Because the identification-information sending part sends the identification information if the management information and the identification information are mutually associated and if that identification information is available for provision to the web server, the identification information will not be sent to the web server if the management information and the identification information are not mutually associated or if the associated identification information is unavailable for provision. Thus, sending/not sending to the web server may be properly managed depending on the status of the identification-information.

Herein, management information is information for identifying the advertisement information, including, for example, an advertiser ID allocated to each advertiser (hereinafter referred to as MID), an advertising agent ID allocated to each advertising agent (hereinafter referred to as DID), an ID allocated to each product or service (merchandise) related to an advertisement (hereinafter referred to as PID), and an ID allocated to each site of an advertisement provider (partner) that is associated with the advertising agent and to which a request to post the advertisement information is made (hereinafter referred to as SID). Also, if an individual posts the advertisement information on their web page, blog, etc., based on a contract with the partner, an ID allocated to each personal page or personal blog ID (hereinafter referred to as UID) may be included.

The device may further includes an identification-information-association executing part that, if the identification information and the management information are not mutually associated, associates the identification information with the management information.

Because the identification-information-association executing part associates the identification information with the management information if the identification information and the management information are not mutually associated (i.e., if the association between both is removed), the identification-information sending part may, if receiving the management information from a web server, always send the identification information to that web server. Thus, in the web page, the identification information associated with the advertisement information may be displayed at all times.

In addition to extracting that identification information from identification information not associated with any management information, by extracting it from identification information not associated with any call receiver, associating it with a call receiver related to the advertisement information, and also associating it with the management information to send it to the web server, a call based on the identification information provided in the web page may be properly connected to that call receiver.

The information management device according to Claim 8, further includes an identification-information-association executing part that, if the identification information is unavailable for provision to the web server, associates other identification information different from said identification information with the management information.

Because the identification-information-association executing part associates other identification information with the management information if the identification information associated with the management information is unavailable for provision, the identification-information sending part may, even if the identification information is unavailable for provision when acquiring the management information from a web server, send other identification information to the web server. Thus, in the web page, the identification information associated with the advertisement information may be displayed at all times.

In addition to extracting other identification information from identification information not associated with any management information, by extracting it from identification information not associated with any call receiver, associating it with a call receiver related to the advertisement information and also associating it with the management information to send it to the web server, a call based on other identification information provided in the web page may be properly connected to that call receiver.

An information management program related to still another exemplary aspect of the present invention is an information management program to manage identification information that is explicitly or implicitly provided in a web page and identifies a call receiver, wherein the information management program causes a computer to fulfill functions to change the status of the identification information rendered available for a call connection to a first call receiver from being available for sending to the web server hosting the web page into being unavailable for sending, change the status of the identification information rendered unavailable for sending into being available for a call connection to a second call receiver, and change the status of the identification information rendered available for a call connection to the second call receiver into being available for sending to the web server or other web servers.

Because the status of the identification information rendered available for a call connection to the first call receiver is changed from being available for sending to the web server to being unavailable for sending and then rendered available for a call connection to the second call receiver and rendered available for sending to the web server or other web servers, different call receivers may be dynamically connected to one identification information. Therefore, this method may contribute to the effective use and the prevention of depletion of identification information.

An information management program related to still another exemplary aspect of the present invention causes a computer to function as a management-information acquisition part for acquiring management information for identifying advertisement information provided in a web page from the web server hosting the web page, a first determination part for determining whether identification information for identifying a call receiver and the acquired management information are mutually associated, a second determination part for determining whether the identification information is available for provision to the web server, and an identification-information sending part that sends the identification information to the web server if the identification information is mutually associated with the management information and available for the provision.

Because the identification-information sending part sends the identification information if the management information and the identification information are mutually associated and if that identification information is available for provision to the web server, the identification information will not be sent to the web server if the management information and the identification information are not mutually associated or if the associated identification information is unavailable for provision. Thus, sending/not sending to the web server may be properly managed depending on the status of the identification information.

A call receiving device related to still another exemplary aspect of the present invention includes a call receiving part that receives a call based on identification information that is explicitly or implicitly provided in a web page and that identifies a call receiver, a call-receiver-information receiving part that, if any call receiver is associated with the identification information, receives information of the call receiver, and if no call receiver is associated with said identification information, receives information indicating the absence of call receivers, and a call connection part that, if the information of the call receiver is received, connects the call to the call receiver, and if the information indicating the absence of call receivers is received, renders the call unconnected.

Further objectives and other features of the present invention will become readily apparent from the following description of the preferred embodiments with reference to the accompanying drawings.

### Effects of the Invention

According to the present invention, by dynamically allocating identification information for indicating a phone number in a Pay-Per-Call system to individual items of advertisement information and identifying a call receiver, and by enabling the reuse of the identification information, the effective use and the prevention of depletion of the identification information resources may be allowed

By dynamically changing the identification information depending on the period of provision to a web page and the number of times of provision, the advertising effectiveness may also be ascertained by period of time or time zone. Also, by extending/reducing a period connected or unconnected to the call receiver depending of the degree of calls based on identification information for which provision to the web page has been terminated, it is possible to accurately ascertain the advertising effectiveness, prevent confusion among users, and further the effective use of identification information resources.

### Detailed Description of the Invention

### [Embodiment 1]

Referring now to the accompanying drawings, a description will be now given of an advertisement information management system S using an information management method according to one aspect of the present invention. Furthermore, in the present specification, a server means a server computer, and a site (a website and an Internet site are also generally synonymous) means a collective entity of web pages built virtually within the server. A web page can be specified by an URL and is a virtual information-providing medium in which various types of information such as character information and image information are posted. Herein, "posting on a website" is used in a synonymous manner with "posting on a web page", and "viewing a website" is used in a synonymous manner with "viewing a web page".

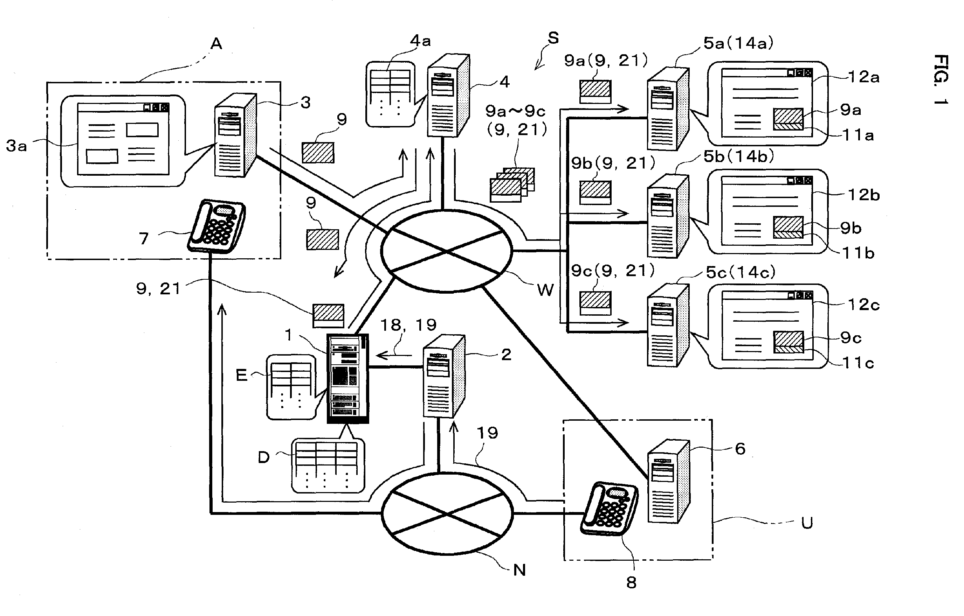

Figure 1 is a schematic diagram illustrating the overall configuration of this advertisement information management system S. This advertisement information management system S is roughly configured with an information management server (information management device) 1 and a call receiving server (call receiving device) 2, and the information management server 1 is connected to an advertiser's server 3, an agent's server 4, advertisement providing servers 5a-5c, and a user's computer 6 via the internet W in a manner that allows for information to be received and sent. The advertiser and the user have an advertiser's phone 7 and a user's phone 8, respectively, which are connected to the call receiving server 2 via a telephone network N.

The advertiser's server 3 is a server computer managed by an advertiser A, and an advertiser's website (advertiser's site) 3a is built internally as a second Internet site. This advertiser's site 3a is linked to advertisement information 9a-9c described below and the content of the advertiser's site 3a (detailed information of the advertisement information) will be displayed on the user's computer 6 when a user U clicks on the advertisement information 9a-9c. Moreover, the advertiser A can send a banner image 9 to the agent's server 4 via the advertiser's server 3.

This banner image 9 is, for example, a decorative advertisement image to which various colors and patterns have been added to gather the attention of users, or a descriptive advertisement image that briefly describes the content of the advertisement of the advertiser A.

The agent's server 4 is a server computer managed by the advertising agent and connected to a plurality of advertisement providing servers 5a-5c via the Internet W, and comprehensively manages these advertisement providing servers 5a-5c. The agent's server 4 has a function to receive the banner image 9 from the advertiser's server 3. Then, said server sends the banner image 9 to the information management server 1 and receives the banner image 9 combined with a script (index information) 21 such as Flash from the information management server 1. Furthermore, said server also has a function to send the combined banner image 9 as advertisement information 9a-9c to the plurality of advertisement providing servers 5a-5c. Details of this script 21 are described below.

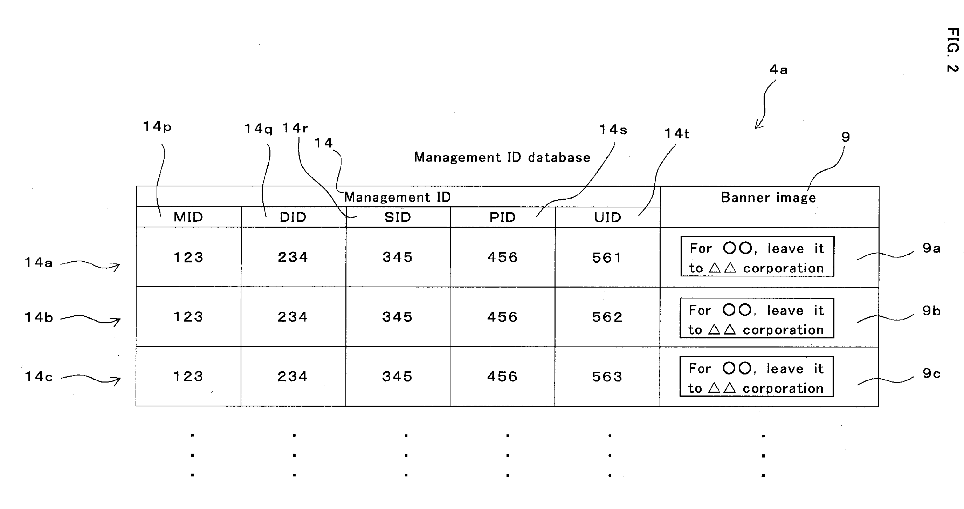

The agent's server 4 has an internal memory device that is not shown. Inside that memory device, a management ID database 4a is built as shown in Figure 2. This management ID database 4a is built by mutually associating a management ID (management information) 14 and the banner image 9.

This management ID 14 is information used for accounting management for each item of advertisement information 9a-9c and is also information that identifies advertisement information 9a-9c. The management ID is composed of an MID (advertiser ID) 14p, a DID (advertising agent ID) 14q, a PID (merchandise ID) 14r, and an SID (advertisement providing site ID) 14s, for example. Specifically, the management ID 14 allows for identifying advertisement information for merchandise posted on an advertisement providing site managed by an advertising agent. Furthermore, if the management ID 14 includes a UID (personal page ID) 14t, the management ID allows for identifying advertisement information based on a contract with an advertisement providing site administrator (advertisement provider) and posted on a personal page (or a personal blog, etc). Thus, individual items of the advertisement information 9a-9c are associated with the management IDs 14a-14c, respectively.

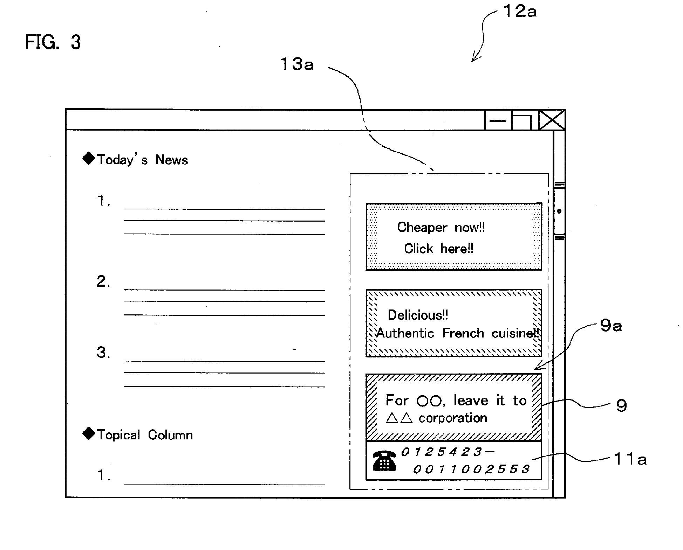

The advertisement providing servers (web servers) 5a-5c are server computers each managed by an advertisement provider, and advertisement providing sites 12a-12c are built inside each of the servers as first Internet sites. Figure 3 is an example of a display screen of a web page of the advertisement providing site 12a.

This advertisement providing site 12a is a so-called portal site, and various types of information are posted within the web page. An advertisement frame 13a is placed within the web page, and the advertisement information 9a received from the agent's server 4 is posted within the advertisement frame 13a.

The advertisement information 9a is configured by combining the banner image 9 with the script 21 and has a function to display the identification information 11a to the user U with the functions of the script 21 while gathering the attention of the user U. The identification information 11a is information for identifying a call receiver, such as, for example, phone number information "0125423-0011002553" having a total of 17 digits that include a server identification number as the first 7 digits and an advertisement identification number as the second 10 digits. The user U can contact by phone (call) the advertiser A of this advertisement information 9a by making a call based on this identification information 11a.

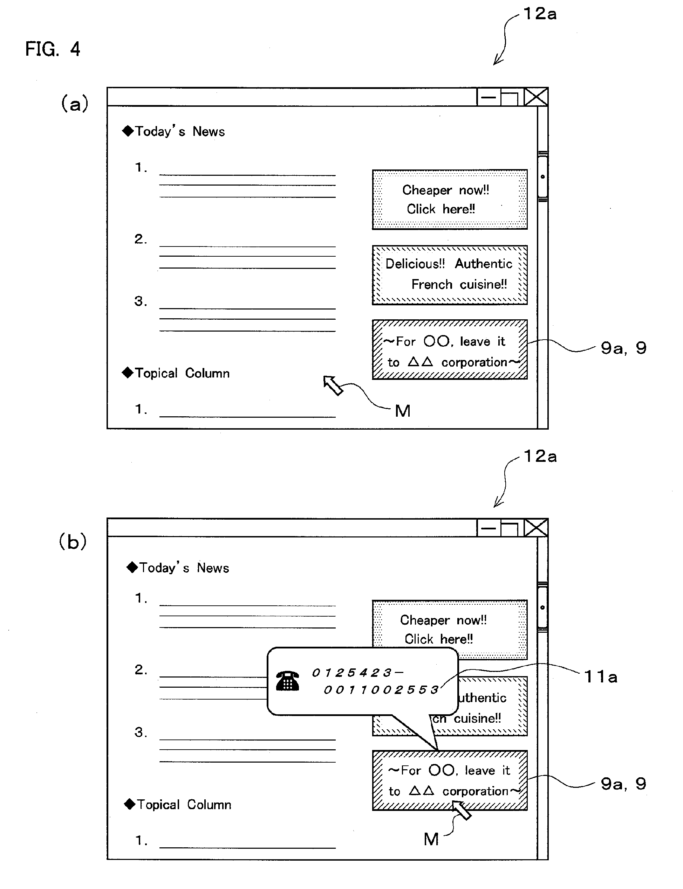

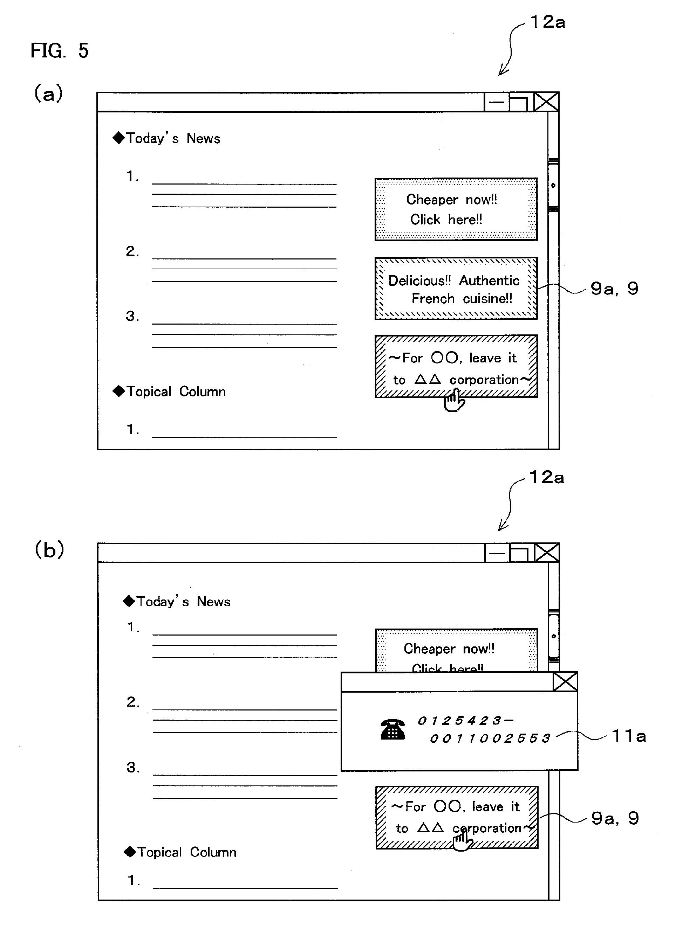

For the method of providing the identification information 11a in the advertisement providing site 12a, several methods are applicable. For example, as shown in Figure 3, there is a method in which the identification information 11a is displayed by being posted on the advertisement providing site 12a along with the banner image 9. For example, there is a method in which, as shown in Figure 4(a), in a normal state (i.e., when the mouse pointer M is not on the banner image 9), only the banner image 9 is displayed and the identification information 11a is not displayed, and as shown in Figure 4(b), when the mouse pointer M is moved onto the banner image 9, the identification information 11a is displayed in a balloon. For example, there is a method in which, as shown in Figure 5(a), in a normal state (i.e., before clicking on the banner image 9 with the mouse), only the banner image 9 is displayed and the identification information 11a is not displayed and, as shown in Figure 5(b), when the banner image 9 is clicked with the mouse, another window appears and the identification information 11a is displayed within the window.

The advertisement information 9b, 9c are similarly posted on the advertisement providing sites 12b, 12c as well. The banner image 9 in the advertisement information 9b, 9c is common to that in the advertisement information 9a, and each item of the identification information 11b, 11c displayed with the functions of the script 21 has a different number. Specifically, the identification information 11b has the number "0125423-0011002554" and the identification information 11c has the number "0125423-0011002555". Therefore, ascertaining which number the user U has called allows for ascertaining which of the advertisement information 9a-9c had advertising effectiveness.

Of course, the identification information 11a-11c is not limited to 17-digit phone number information and may be 2- to 4-digit information that is a part of a phone number or may be an input number of a few digits for the user U to input into the destination server after making the call. Moreover, if the destination server has a voice-recognition function, the identification information 11a-11c may also be a keyword for the user U to say during the call. As the other configurations of the advertisement providing sites 12b, 12c are similar to that of the advertisement providing site 12a, descriptions thereof are omitted.

Furthermore, in the present Embodiment 1, it has been described that the agent's server 4 is managed by the advertising agent and the advertisement providing servers 5a-5c are managed by the advertisement providers as if they are separate servers, but of course, they do not necessarily have to be separate. For example, one advertising agent may manage the plurality of advertisement providing servers 5a-5c and eliminate the agent's server 4, and each of the advertisement providing servers 5a-5c may function as the agent's server. Moreover, based on a contract with the administrator of each of the advertisement providing sites 12a-12c, the advertisement information 9a-9c may be posted on a plurality of personal pages associated with each of the advertisement providing sites 12a-12c.

The user's computer 6 is a computer managed and used by the user U who views the advertisement providing sites 12a-12c. When the user U views the advertisement providing site 12a via the internet W with the user's computer 6, the advertisement information 9a will be displayed on the display screen of the user's computer 6 along with various types of information within the advertisement providing site 12a.

Then, when the user U is interested in the advertisement information 9a and calls the displayed number "0125423-0011002553" from the user's phone 8 at home, it is received by the call receiving server 2, allowing for the phone call to the advertiser A.

The information management server 1 is a server computer that configures the principal part of this advertisement information management system S and is connected to the agent's server 4 via the Internet W. This information management server 1 executes the operation to combine the banner image 9 received from the agent's server 4 with the script 21 and return the combined banner image 9 to the agent's server 4. Furthermore, it also executes the operation to acquire request signals for the identification information 11a-11c along with information of the management IDs 14a-14c from the advertisement providing servers 5a-5c. Based on the request signals, it also executes an operation to dynamically allocate and send the identification information 11a-11c to the advertisement providing servers 5a-5c corresponding to the management IDs 14a-14c based on the status thereof. Furthermore, when receiving the identification information 11a-11c from the call receiving server 2 described below, it also executes an operation to send information indicating the status of the identification information 11a-11c to the call receiving server 2.

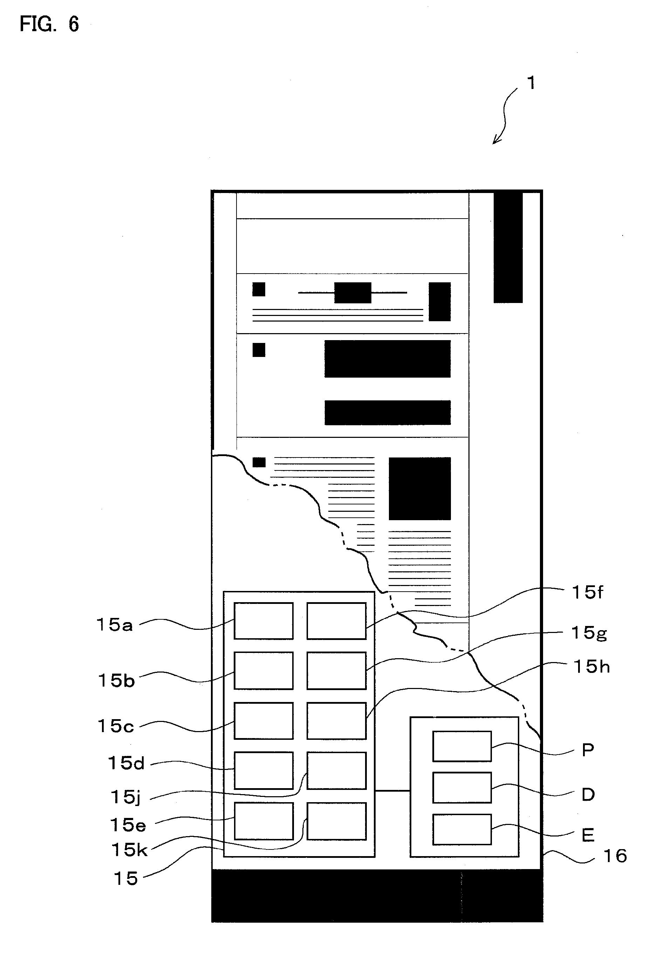

Figure 6 is a block diagram showing an overview of the internal configuration of this information management server 1. The information management server 1 internally has a central processing unit (CPU) 15 and the memory device 16. This CPU 15 executes each operation described above as the principal part of the computer.

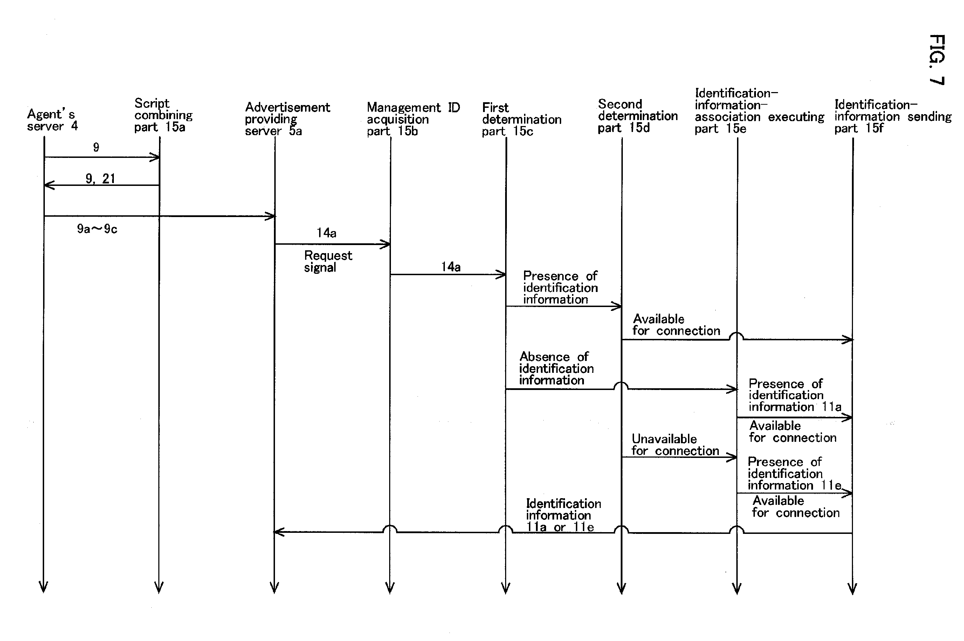

In the memory device 16, an information management program P, information management database D, and identification information database E are stored. Each operation described above is executed by the CPU 15 based on instructions from this information management program P. Specifically, with the information management program P, the CPU 15 functions as a script combining part 15a, a management ID acquisition part (management-information acquisition part) 15b, a first determination part 15c, a second determination part 15d, an identification-information-association executing part 15e, an identification-information sending part 15f, a sending-status changing part 15g, a connection-status changing part 15h, a call-reception-information receiving part 15j, and a period changing part 15k. The functions of each part and operations thereof will now be described as follows with reference to Figure 7.

The script combining part 15a has a function to combine the predefined script 21 with the banner image 9 received from the agent's server 4 and return it to the agent's server 4. The banner image 9 combined with the script 21 is sent as the advertisement information 9a-9c from the agent's server 4 to the plurality of advertisement providing servers 5a-5c.

The script 21 is an operation module that is composed of Flash, etc., and has a function to send a request signal for the identification information 11 to the information management server 1 and display the identification information 11 from the information management server 1 within a web page. Specifically, when a web page of the advertisement providing sites 12a-12c is viewed by the user U, based on the function of the script 21 in the advertisement information 9a-9c posted on the web page, the identification information 11a-11c received from the information management server 1 will be displayed within the web page.

The management ID acquisition part 15b has a function to acquire the management IDs 14a-14c sent from the advertisement providing servers 5a-5c. For example, if the user U accesses the advertisement providing site 12a using the user's computer 6, based on the function of the script 21 in the advertisement information 9a, a request signal for identification information is sent from the advertisement providing server 5a to the information management server 1. In doing so, from the advertisement providing server 5a, the management ID 14a of the advertisement information 9a is sent to the information management server 1 along with the request signal and the management ID 14a is acquired by the management ID acquisition part 15b. The management ID acquisition part 15b sends information of the acquired management ID14 to the first determination part 15c and the second determination part 15d.

The first determination part 15c has a function to determine whether the acquired management ID 14a is mutually associated with any identification information. As this determination function is performed by using the information management database D, the information management database D will now be described as follows.

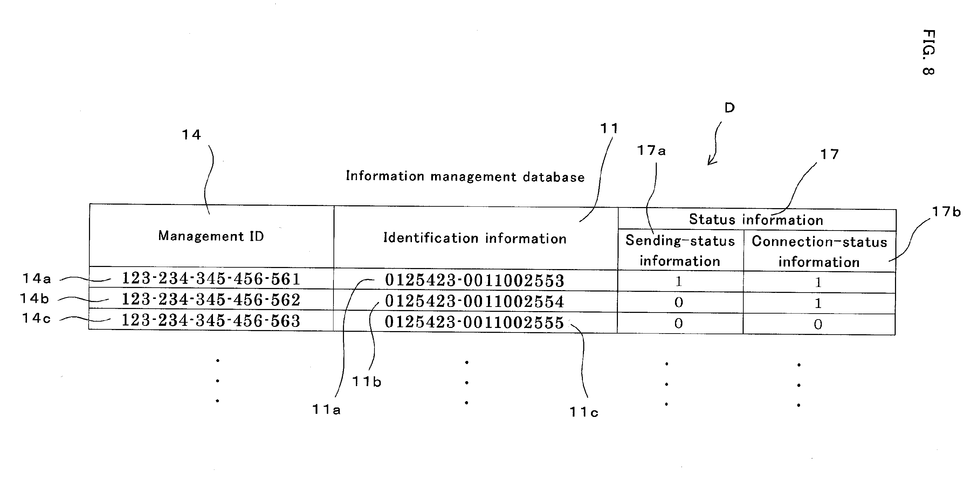

Figure 8 is a data structure diagram showing an overview of the internal structure of the information management database D. The information management database D is built with the management ID 14, identification information 11, and status information 17 that are each mutually associated. In this information management database D, for example, if the identification information 11a is associated with the management ID 14a, it means that a call receiver indicated by the management ID 14a (i.e., the advertiser's phone 7 of the advertiser A) and the identification information 11a are mutually associated.

Herein, the status information 17 is information indicating various statuses of the identification information 11 and has sending-status information 17a and connection-status information 17b, for example. If the sending-status information 17a is "1", this indicates a status in which it is possible to send the identification information 11 to the advertisement providing servers 5a-5c. If the sending-status information 17a is "0", this indicates a status in which it is not possible to send the identification information 11 to the advertisement providing servers 5a-5c.

Moreover, if the connection-status information 17b is "1", this indicates a status in which a call based on the identification information 11 can be connected to a call receiver indicated by the management ID 14 associated with the identification information 11. If the connection-status information 17b is "0", this indicates a status in which a call based on the identification information 11 cannot be connected to a call receiver indicated by the management ID 14 associated with the identification information 11. For example, if the identification information 11a is associated with the management ID 14a and if the connection-status information 17b thereof is "1", a call based on the identification information 11a will be connected to the advertiser's phone 7 of the advertiser A indicated by the management ID 14a.

In addition, in the information management database D, if the sending-status information 17a of the identification information 11 is "1", the connection-status information 17b is always "1", whereas if the sending-status information 17a is "0", the connection-status information 17b may be "1" or "0". Moreover, a plurality of items of identification information 11 may be associated with one management ID 14, among which there is always one identification information 11 whose sending-status information 17a is "1" while the sending-status information 17a of the other items of identification information 11 is "0".

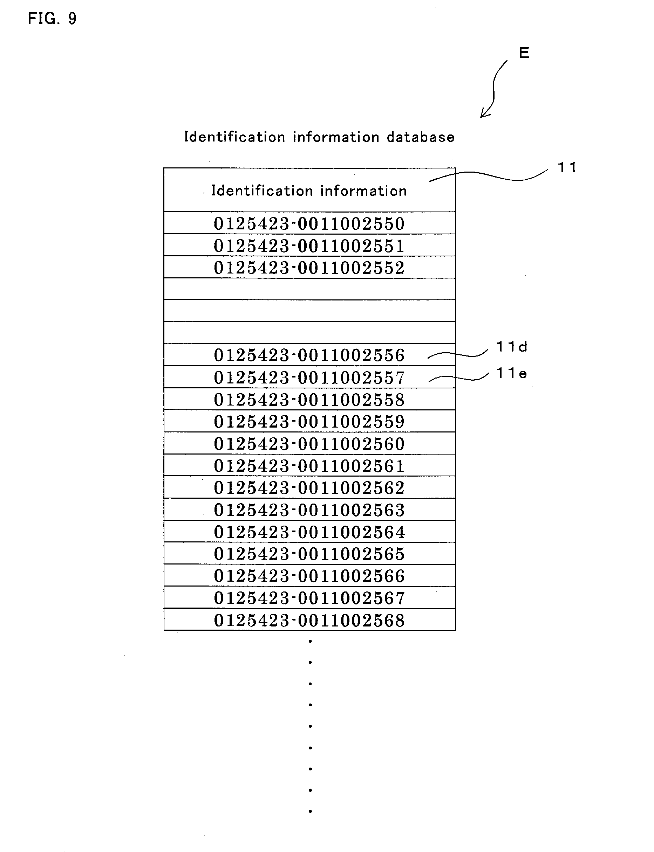

Within the identification information database E in the memory device 16, as shown in Figure 9, the plurality of items of identification information 11 have been stored without being associated with either the management ID 14 or a call receiver in advance. When particular identification information 11a among them is associated with a particular management ID 14a by the identification-information-association executing part 15e, in the information management database D, the identification information 11a will be set to be associated with the management ID 14a, and the sending-status information 17a and the connection-status information 17b are set for the identification information 11a by the sending-status changing part 15g and the connection-status changing part 15h. Then, when the association between the management ID 14a and the identification information 11a is removed by the identification-information-association executing part 15e, the identification information 11a associated with the management ID 14a in the information management database D will be deleted. Then, if all of the identification information 11a is deleted from the information management database D, the identification information 11a will again be stored into the identification information database E. Subsequently, when another management ID 14b and the identification information 11a are mutually associated in this case, the identification information 11a will be set in a field corresponding to the management ID 14b in the information management database D.

The plurality of items of the identification information in this identification information database E may be stored without being associated with either the management ID 14 or a call receiver; however, for example, an association with a call receiver (i.e., an advertiser) alone may be made in advance. For example, in a case in which 1,000,000,000 types of identification information are stored, 200,000,000 types of identification information may be allocated to 5 call receivers (advertisers) each in advance. In that case, when the identification-information-association executing part 15e described below extracts the identification information from this identification information database E, based on information of the call receiver (advertiser) indicated by the management ID 14, it will extract one item of identification information from the information allocated to the call receiver.

The first determination part 15c determines the presence or absence of the identification information 11 associated with the management information ID 14a by referring to the information management database D, and if there is associated identification information 11 (identification information 11a in the present embodiment), it sends information indicating "presence of identification information" to the second determination part 15d. If there is no identification information 11 associated with the management ID 14a, it sends information indicating "absence of identification information" to the identification-information-association executing part 15e.

The second determination part 15d has a function to determine whether the identification information 11 is available for provision to the web server. Specifically, if it receives information indicating "presence of identification information" from the first determination part 15c, it confirms the sending-status information 17a of the identification information 11a associated with the management ID 14a by referring to the information management database D. Then, if the sending-status information 17a of the identification information 11a is "1" (i.e., indicating a status available for sending), it sends information indicating "available for sending" to the identification-information sending part 15f.

On the other hand, if the sending-status information 17a of all of the identification information 11 associated with the management ID 14a is "0", it sends information indicating "unavailable for sending" to the identification-information-association executing part 15e.

The identification-information-association executing part 15e has a function to associate the identification information 11 with the management ID 14 if the identification information 11 and the management ID 14 are not mutually associated. Specifically, when it receives information indicating "absence of identification information" from the first determination, it extracts new identification information 11a associated with neither the management ID 14 nor a call receiver from the identification information database E and associates it with the management ID 14a.

In addition, when new identification information 11a is associated with the management ID 14a by the identification-information-association executing part 15e, both the sending-status information 17a and the connection-status information 17b of the identification information 11a are set to "1" by the sending-status changing part 15g and the connection-status changing part 15h. Then, the identification-information-association executing part 15e sends information indicating "presence of identification information" and "available for sending" to the identification-information sending part 15f.

Moreover, the identification-information-association executing part 15e also has a function to associate other identification information 11e different from the identification information 11 with the management ID 14 if the identification information 11 is unavailable for provision to the advertisement providing servers 5a-5c. Specifically, when it receives information indicating "unavailable for sending" form the second determination part 15d, it extracts other identification information 11e that is different from the identification information 11a and is associated with neither the management ID 14 nor a call receiver but associated with the management ID 14a from the identification information database E and associates it with the management ID 14a.

In addition, when the management ID 14a is associated with other identification information 11e by the identification-information-association executing part 15e, both the sending-status information 17a and the connection-status information 17b of other identification information 11e are set to "1" by the sending-status changing part 15g and the connection-status changing part 15h. Then, the identification-information-association executing part 15e sends information indicating "presence of identification information" and "available for sending" to the identification-information sending part 15f.

The identification-information sending part 15f has a function to send the identification information 11 to the advertisement providing servers 5a-5c if the identification information 11 and the management ID 14 are mutually associated and available for provision. Specifically, if receiving information indicating "available for sending" from the second determination part 15d, or if receiving information indicating "presence of identification information" and "available for sending" from the identification-information-association executing part 15e, it sends the identification information 11 that is associated with the management ID 14a and available for sending to the advertisement providing server 5a indicated by the management ID 14a.

If the user U accesses the advertisement providing site 12a through this series of functions and operations by the CPU 15, the identification information associated with the management ID 14a and rendered available for sending at that point will be dynamically sent to the advertisement providing server 5a and displayed on the advertisement providing site 12a.

In addition, in the present Embodiment 1, in both cases in which the first determination part 15c determines "absence of identification information" and in which the second determination part 15d determines "unavailable for sending", the identification-information-association executing part 15e is configured to associate new identification information 11 with the management ID 14a. However, it is also possible for information indicating "absence of identification information" by the first determination part 15c and information indicating "unavailable for sending" by the second determination part 15d to be configured to be sent to the identification-information sending part 15f, and in those cases, the identification information is not sent to the advertisement providing server 5a.

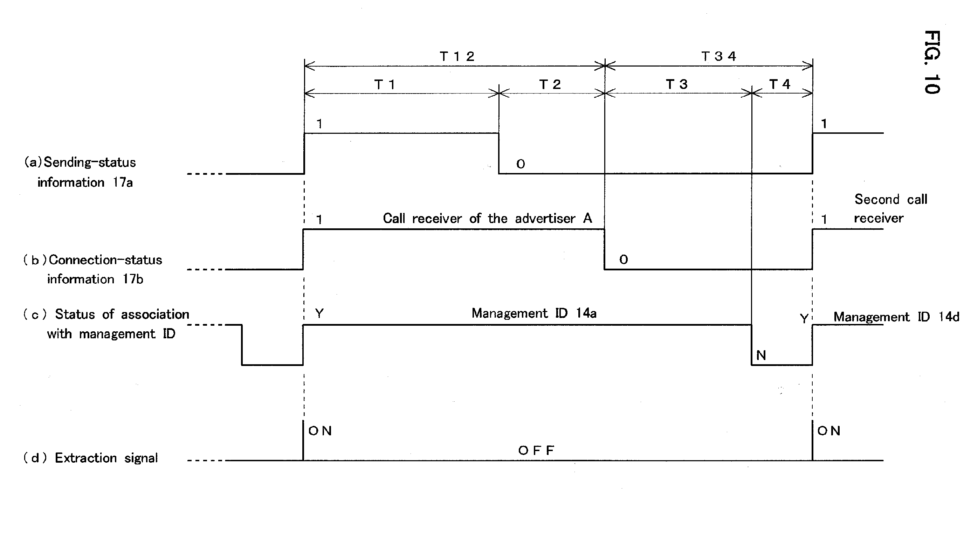

Next, each function of the sending-status changing part 15g, the connection-status changing part 15h, the call-reception-information receiving part 15j, and the period changing part 15k will now be described using the explanatory diagram of statuses shown in Figure 10. Figure 10 is an explanatory diagram of statuses for describing each status of the identification information 11a.

The sending-status information 17a indicated by (a) in the figure is, as described above, information indicating whether the identification information 11a is available for sending to the advertisement providing server 5a when there is a request signal from the advertisement providing server 5a. The "1" status of this sending-status information 17a indicating that it is available for sending and the "0" status indicating that it is unavailable for sending are set and changed based on the function of the sending-status changing part 15g.

The connection-status information 17b indicated by (b) is information indicating whether a call based on the identification information 11a is available for a call connection to a call receiver. The "1" status of this connection-status information 17b indicating that it is available for connection and the "0" status indicating that it is unavailable for connection are set and changed based on the function of the connection-status changing part 15h. Herein, a call receiver refers to an advertiser's contact destination (advertiser's phone 7) indicated by the management ID 14a associated with the identification information 11a. Specifically, if the identification information 11a is associated with the management ID 14a, the call receiver is the advertiser's phone 7 (first call receiver), but if the identification information 11a is associated with another new management ID 14d, the call receiver will be another call receiver (second call receiver) different from the advertiser's phone 7.

The status of association with the management ID 14 indicated by (c) is a status indicating whether the identification information 11a is associated with the management ID. Specifically, "Y" is a status in which the identification information 11a is associated with any item of management ID 14 and the identification information 11a is not in the identification information database E but in the information management database D. Conversely, "N" is a status in which the identification information 11a is associated with none of the items of management ID 14 and the identification information 11a is in the identification information database E and not in the information management database D.

The extraction signal indicated by (d) is a signal representing an extracting operation from within the identification information database E by the identification-information-association executing part 15e. When this extraction signal is turned "ON", the identification information 11a is extracted from within the identification information database E and associated with the management ID 14, and both the sending-status information 17a and the connection-status information 17b of the identification information 11a are set to "1".

For example, if the user U accesses the advertisement providing site 12a during a published period T1 in the figure, the identification information 11a is associated with the management ID 14a and made available for sending and connection, and the identification information 11a is therefore displayed on the advertisement providing site 12a. Then, a call based on the identification information 11a is connected to the advertiser's phone 7.

However, if the user U accesses the advertisement providing site 12a during an unpublished period (predefined period) T2 in the figure, the identification information 11a is associated with the management ID 14a but unavailable for sending, and the identification information 11a is therefore not sent to the advertisement providing server 5a. At this time, other identification information 11e extracted by the identification-information-association executing part 15e is sent to the advertisement providing server 5a. Because the identification information 11a is unavailable for sending but available for connection during this unpublished period T2, if a call based on the identification information 11a is made, that call is connected to the advertiser's phone 7 as the first call receiver. In addition, the published period T1 and unpublished period T2 are collectively referred to as a period available for connection T12.

If the user U accesses the advertisement providing site 12a during a disabled period T3 in the figure, the identification information 11a is associated with the management ID 14a but unavailable for sending and unavailable for connection. Therefore, the identification information 11a is not sent to the advertisement providing server 5a, and a call based on the identification information 11a is rendered unavailable for connection (busy, on hold, announcement of failed connection, etc.). In addition, other identification information 11e is displayed on the advertisement providing site 12a.

Moreover, the case in which the user U accesses the advertisement providing site 12a during a dissociated period T4 is similar to the case of the disabled period T3. However, in this dissociated period T4, the association between the management ID 14a and the identification information 11a is removed and the identification information 11a is deleted from the information management database D and stored into the identification information database E. Therefore, the identification information 11a is available for association with any management ID 14 and call receiver based on a request signal from other advertisement providing servers. In addition, the disabled period T3 and the dissociated period T4 are collectively referred to as a period unavailable for connection T34.

In addition, these respective periods T1-T4 may be set at any time or period. Moreover, particularly for the published period T1, etc., they may be set not on the basis of time but on the basis of the number of accesses to the advertisement providing server 5a (i.e., the number of times the identification information 11a is sent to the advertisement providing server 5a).

During this dissociated period T4, when extraction of the identification information 11a by the identification-information-association executing part 15e (X in the figure) is executed and an association with a new management ID (new management information) 14d is made, the identification information 11a will be sent to an advertisement providing server indicated by the new management ID 14d, and a call based on the identification information 11a will be connected to a second call receiver indicated by the new management ID 14d.

The call-reception-information receiving part 15j has a function to receive call-reception information 18 indicating that there was a call based on the identification information 11a from the call receiving server 2. Then, based on the information management database D, it returns information of the call receiver associated with the identification information 11a and rendered available for connection to the call receiving server 2.

Specifically, if there is no identification information 11a in the information management database D, or if there is the identification information 11a but its connection-status information 17b is "0", it returns information indicating "unavailable for connection" to the call receiving server 2. On the other hand, if there is the identification information 11a in the information management database D and its connection-status information 17b is "1", it returns the phone number information of the advertiser's phone 7 as the call receiver based on the management ID 14a associated with the identification information 11a.

The period changing part 15k has a function to extend the unpublished period T2 if there is a call based on the identification information 11a during the unpublished period (predefined period) T2 between changing the status of the identification information 11a into being unavailable for sending and changing the status into being unavailable for a call connection to the advertiser's phone 7. Specifically, if the call-reception-information receiving part 15j receives the call-reception information 18 based on the identification information 11a during the unpublished period T2, it extends the period in which the call can be connected to the advertiser's phone 7 based on the judgment that the advertising effectiveness of the advertisement information 9a associated with the identification information 11a remains.

For example, it is also possible to configure the unpublished period T2 to be reduced if there is no call based on the identification information 11a at all at a particular point (e.g., intermediate point) within the unpublished period T2.

Moreover, the period changing part 15k has a function to extend the period unavailable for connection T34 if there is a call based on the identification information 11a during the period unavailable for connection T34 between changing the status of the identification information 11a into being unavailable for a call connection to the advertiser's phone 7 and changing the status into being available for a call connection to the second call receiver. In particular, if the call-reception-information receiving part 15j receives the call-reception information 18 based on the identification information 11a during the disabled period T3, it extends the disabled period T3 in which the call cannot be connected the based on the judgment that it is too early to associate the identification information 11a with a new call receiver.

For example, it is also possible to configure the disabled period T3 to be reduced if there is no call based on the identification information 11a at all at a particular point (e.g., intermediate point) within the disabled period T3.

The call receiving server 2 is a server computer for receiving a call from a user's phone 8 of the user U and is connected to the information management server 1 and the telephone network N. The user's phone 8 and the advertiser's phone 7 of the advertiser A are also connected to this telephone network N, allowing a call to be made from the user U to the advertiser A via the call receiving server 2.

The call receiving server 2 has an internal central processing unit (CPU) that is not shown, and that CPU functions as a call receiving part, an input-information extracting part, an information sending part, a call-receiver-information receiving part, and a call connection part.

The call receiving part has a function to receive the call from the user's phone 8. Specifically, when the user U who has viewed the advertisement providing site 12a inputs the identification information 11a (17-digit phone number information "0125423-0011002553") displayed on a site page into the user's phone 8, a call is made to the call receiving server 2 based on the first 7-digit server identification number. The call receiving part recognizes the call without receiving it and acquires information of the input 17-digit phone number "0125423-0011002553". As the call receiving part does not receive the call, the user U may make the phone call smoothly as if they had directly called the call receiver without becoming aware of the relay of the call receiving server 2.

The input-information extracting part has a function to extract the phone number information as the input information 19 when it receives the phone number information from the call receiving part. In the present Embodiment 1, all of the 17 digits of the phone number information input in the user's phone 8 by the user U are extracted as the input information 19, but of course, a part of the phone number information may be extracted as the input information 19, or voice information stated by the user U based on information such as a keyword may be extracted as the input information 19.

For example, when the user U inputs the first 7-digit server identification number to make a call, the call receiving server 2 receives it, and if the second 10-digit advertisement identification number is input during the automatic response, the advertisement identification number may be extracted as the input information 19 by the input-information extracting part.

Moreover, in cases in which the call receiving server 2 has a voice-recognition function, the user U says a keyword as the input information 19 during the automatic response and the voice information may thereby be extracted as the input information 19 by the input-information extracting part. For example, when the user U says "0011002553" on the phone, the advertisement identification number for the call may be recognized to be "0011002553".

Furthermore, in the present Embodiment 1, in cases in which the phone number information as the identification information 11a is "0125423-0011002553", in which the phone number information as the identification information 11b is "0125423-0011002554", and in which the phone number information as the identification information 11c is "0125423-0011002555", the advertiser's phone 7 of the advertiser A will be the call receiver. Then, it is possible to ascertain which of the advertiser's phone 7 was based on for the user U to make a call based on the differences in the numbers of the phone number information, specifically the final digit.

The information sending part has a function to send the input information 19 extracted by the input-information extracting part along with the call-reception information 18 to the information management server 1. The input information 19 and the call-reception information 18 are received by the call-reception-information receiving part 15j.

The call-receiver-information receiving part 15j has a function to receive information of the call receiver if any call receiver is associated with the identification information 11a corresponding to the input information 19, and to receive information indicating the absence of call receivers if no call receiver is associated with the identification information 11a. Specifically, if the identification information 11a corresponding to the input information 19 is associated with the management ID 14a and the connection-status information 17b of the identification information 11a is "1", the phone number information of the advertiser A as the call receiver indicated by the management ID 14a is received. On the other hand, if the identification information 11a is not associated with any management ID 14, or if it is associated with the management ID 14 but its connection-status information 17b is "0", index information indicating "unavailable for connection" corresponding to the absence of call receivers is received.

The call connection part connects a call to the advertiser's phone 7 if the information received by the call-receiver-information receiving part 15j is information of the call receiver (phone number information of the advertiser A). On the other hand, it renders the call unconnected if the information received by the call-receiver-information receiving part 15j is information indicating "unavailable for connection".

Furthermore, in the present Embodiment 1, an example has been described that is configured so that the call receiving server 2 extracts the input information in the call and sends the input information to the information management server 1, but of course, it may be configured so that the information management server 1 has an input-information extracting part and when it receives call information from the call receiving server 2, it extracts the input information from the information.

Moreover, in the present Embodiment 1, an example has been described in which the information management server 1 and the call receiving server 2 are configured as separate bodies, but of course, they may be configured so that the functions of both are implemented with one server computer. Furthermore, one server computer may function as the agent's server 4 as well as the information management server 1 and the call receiving server 2.

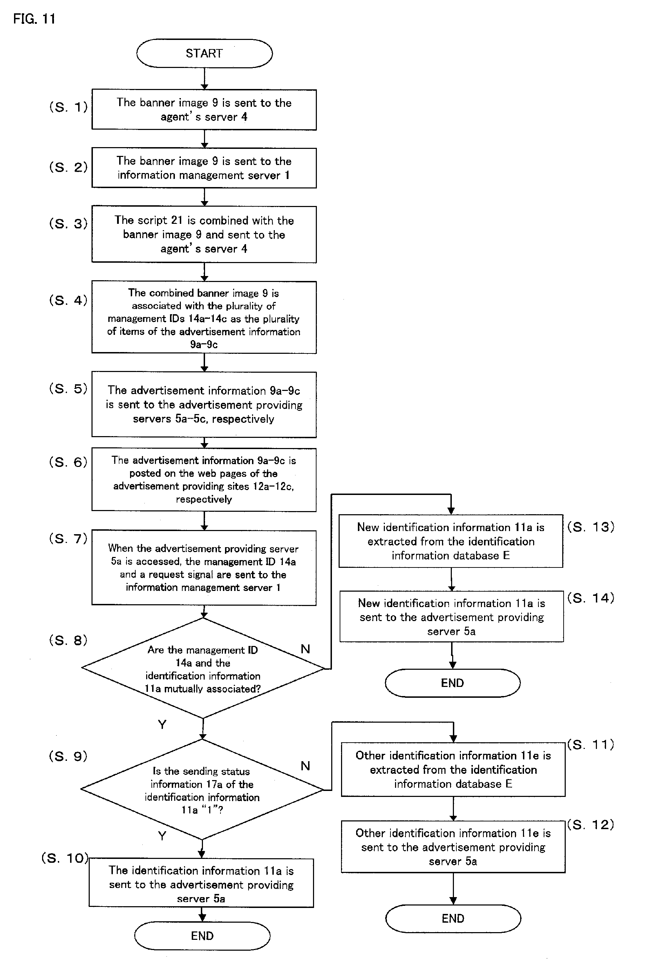

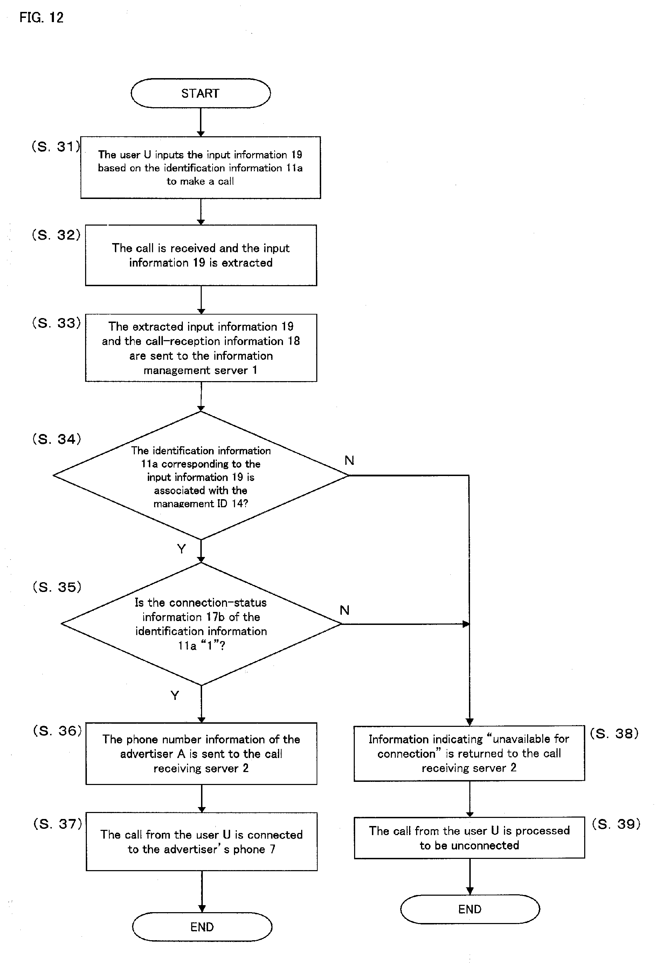

Next, the operations of the advertisement information management system S using the advertisement information management method according to this Embodiment 1 will be described using the flow charts shown in Figures 11 and 12.

First, the procedure before the identification information 11 is displayed within the web page when the user U views the advertisement providing site 12a is described using Figure 11. The advertiser's server 3 sends the banner image 9 to the agent's server 4 based on the request for posting an advertisement from the advertiser A (S. 1). The agent's server 4 sends the received banner image 9 to the information management server 1 (S. 2). The information management server 1 combines the script 21 with the received banner image 9 and sends it to the agent's server 4 (S. 3).

The agent's server 4 associates the received and combined banner image 9 with the plurality of the management IDs 14a-14c as the plurality of items of the advertisement information 9a-9c (S. 4) and sends the advertisement information 9a-9c to advertisement providing servers 5a-5c, respectively (S. 5).

The advertisement providing servers 5a-5c post the received advertisement information 9a-9c on web pages of the advertisement providing sites 12a-12c, respectively (S. 6).

When the user U accesses the advertisement providing server 5a using the user's computer 6 and views the advertisement providing site 12a, the management ID 14a and the request signal are sent to the information management server 1 by the function of the script 21 of the advertisement information 9a (S. 7). At the information management server 1, it is determined whether the identification information 11a is associated with the management ID 14a (S. 8). Then, if the identification information 11a is associated with the management ID 14a (S. 8), the sending-status information 17a of the identification information 11a is determined (S. 9). If the sending-status information 17a of the identification information 11a is "1" (S. 9), the identification information 11a is sent to the advertisement providing server 5a (S. 10) and the identification information 11a is displayed on the web page of the advertisement providing site 12a.

Even in cases in which the identification information 11a is associated with the management ID 14a (S. 8), if the sending-status information 17a of the identification information 11a is "0" (S. 9), other identification information 11e different from the identification information 11a is extracted from the identification information database E (S. 11), the identification information 11e is sent to the advertisement providing server 5a (S. 12), and the identification information 11e is displayed on the web page of the advertisement providing site 12a. Of course, in this case, if other identification information 11d separate from the identification information 11a is associated with the management ID 14a and the sending-status information 17a of the identification information 11d is "1", the identification information 11d is sent to the advertisement providing server 5a without extracting the identification information 11e.

If no identification information including the identification information 11a is associated with the management ID 14a (S. 8), new identification information 11a is extracted from the identification information database E (S. 13), the identification information 11a is sent to the advertisement providing server 5a (S. 14), and the identification information 11a is displayed on the web page of the advertisement providing site 12a.

Subsequent processing of a call connection by the user U who has seen the identification information 11a will be described using Figure 12. Based on the identification information 11a displayed within the web page of the advertisement providing site 12a, the user U inputs the input information 19 into the user's phone 8 to make a call (S. 31). The call receiving server 2 receives the call and extracts the input information 19 (S. 32). The call receiving server 2 sends the extracted input information 19 and the call-reception information 18 to the information management server 1 (S. 33).

The information management server 1, based on the received input information 19, checks whether the identification information 11a corresponding to the input information 19 is associated with the management ID 14 (S. 34) and confirms the connection-status information 17b of the identification information 11a (S. 35). Then, if the identification information 11a is associated with the management ID 14 (S. 34) and its connection-status information 17b is "1" (S. 35), the call receiver information (phone number information of the advertiser A) is returned to the call receiving server 2 (S. 36). Then, the call receiving server 2, based on the returned call receiver information, connects the call from the user U to the advertiser's phone 7 (S. 37).

If the identification information 11a is not associated with the management ID 14 (S. 34), or if the connection-status information 17b of the identification information 11a is "0" (S. 35), the information management server 1 returns information indicating "unavailable for connection" to the call receiving server 2 (S. 38). The call receiving server 2 processes the call from the user U as unconnected (processing as busy, processing to place the call on hold, processing to announce a failure to connect, etc.) (S. 39).

### [Embodiment 2]

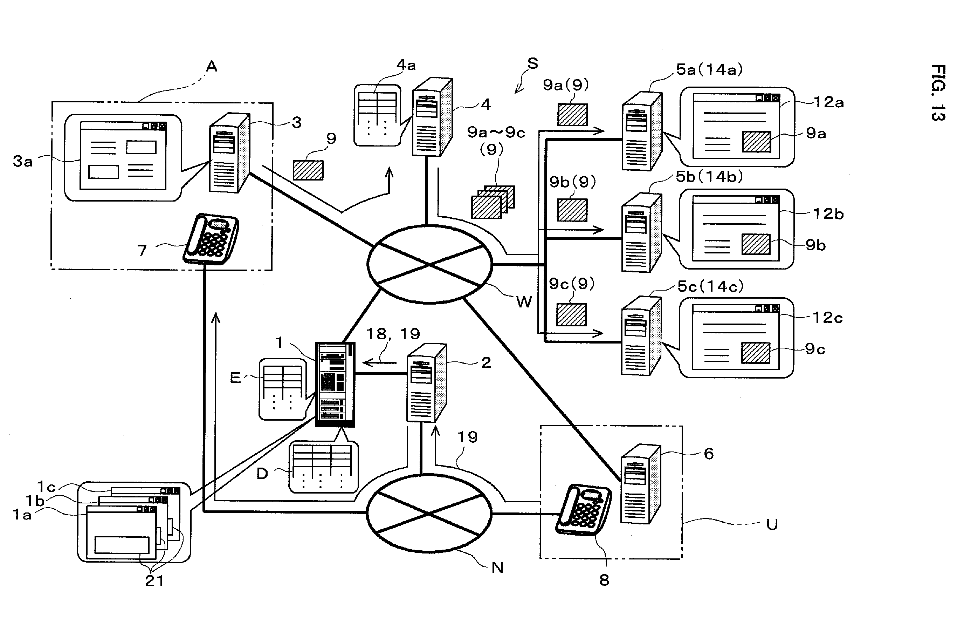

Figure 13 is a schematic diagram showing the overall configuration of an advertisement information management system S' using the information management method according to Embodiment 2 of the present invention. Furthermore, in the present Embodiment 2, configurations similar to those in Embodiment 1 are provided with the same symbols and the descriptions thereof are omitted.

This Embodiment 2 describes the advertisement information management system S' that addresses cases in which the functions of the script 21 cannot be used in the advertisement providing sites 12a-12c, for example if the advertisement providing sites 12a-12c are cell-phone sites.

In this Embodiment 2, when the agent's server 4 receives the banner image 9 from the advertiser's server 3, processes to link the banner image 9 to landing pages 1a-1c built within the information management server 1 are performed, and the banner image 9 is associated with the management IDs 14a-14c and sent to the advertisement providing servers 5a-5c, respectively. Therefore, a process for combining the script 21 with the banner image 9 is not performed by the information management server 1.

On the other hand, within the information management server 1, the landing pages 1a-1c corresponding to the managements ID 14a-14c, respectively, are built. These landing pages 1a-1c are web page with the script 21 embedded therein. For example, when the landing page 1a is accessed based on the link from the advertisement information 9a, information of the management ID 14a and a request signal will be sent to the management ID acquisition part 15b of CPU 15 based on the function of the script 21 in the landing page 1a. Therefore, in the landing page 1a, the identification information 11a associated with the management ID 14a will be displayed.

Of course, instead of building separate landing pages 1a-1c that each correspond to each advertisement information 9a-9c, a single landing page 1a accessed with the link from the plurality of items of the advertisement information 9a-9c may be built to provide a configuration in which each of corresponding management IDs 14a-14c is sent from the advertisement providing servers 5a-5c on which each item of advertisement information 9a-9c is posted upon access to the landing page 1a. This allows the landing page 1a to properly display the identification information 11a-11c corresponding to the received management IDs 14a-14c.

Further, the present invention is not limited to these preferred embodiments, and various variations and modifications may be made without departing from the spirit and scope of the present invention.

For example, in Embodiments 1 and 2, configurations have been described in which the advertiser's site 3a is liked to the advertisement information 9a-9c and the content of the advertiser's site 3a is displayed on the user's computer 6 by clicking on the advertisement information 9a-9c, but this advertiser's site 3a is not an essential requirement. Specifically, in Embodiment 1, the location to which the advertisement information 9a-9c is linked may be a site other than the advertiser's site 3a (a site managed by others than the advertiser A), and even if the advertisement information 9a-9c does not link to any site, it falls within the scope of the present invention.

Of course, in this case, the banner image 9 is not sent from the advertiser's site 3a to the agent's server, but the banner image 9 may be sent from another site described above to the agent's server 4, or the banner image 9 may be generated within the agent's server 4.

### Brief Description of the Drawings

- Fig.1: is a schematic diagram showing the overall configuration of an advertisement information management system using the information management method according to Embodiment 1 of the present invention.
- Fig.2: is a data structure diagram of a management ID database built in the agent's server shown in Figure 1.
- Fig.3: is an example of a display screen for a web page of an advertisement providing site built in an advertisement providing server shown in Figure 1.
- Fig.4: is a diagram describing a method of displaying identification information in a balloon on the advertisement providing site, wherein (a) indicates a state in which the mouse pointer is not on the banner image and the identification information is not displayed in a balloon, and (b) indicates a state in which the mouse pointer is on the banner image and the identification information is displayed in a balloon.
- Fig.5: is a diagram describing a method of displaying the identification information in another window on the advertisement providing site, wherein (a) indicates a state before clicking on the banner image in which the identification information is not displayed, and (b) indicates a state in which the banner image has been clicked and the identification information is displayed in another window.
- Fig.6: is a block diagram showing an overview of the internal configuration of the information management server shown in Figure 1.
- Fig.7: is an illustration describing each function performed by the CPU shown in Figure 6 and the operations thereof.
- Fig.8: is a diagram showing the data structure of an information management database built in the information management server shown in Figure 6.
- Fig.9: is a diagram showing the data structure of an identification information database built in the information management server shown in Figure 6.
- Fig.10: is a status illustration describing each status of the identification information managed in the information management server show in Figure 6.
- Fig.11: is a flow chart describing operations of the advertisement information management system using the information management method according to Embodiment 1 of the present invention, wherein the procedure before the identification information is displayed within the web page of the advertisement providing site is described.
- Fig.12: is a flow chart describing operations of the advertisement information management system using the information management method according to Embodiment 1 of the present invention, wherein the processing of a call connection by the user is described.
- Fig.13: is a schematic block diagram showing the overall configuration of the advertisement information management system using the information management method according to Embodiment 2 of the present invention.

### Description of the Symbols

A: Advertiser
D: Information management database
E: Identification information database
M: Mouse pointer
N: Telephone network
P: Information management program
S, S': Advertisement information management systems
T1: Published period
T2: Unpublished period (predefined period)
T12: Period available for connection
T3: Disabled period
T4: Dissociated period
T34: Period unavailable for connection
U: User
W: Internet
X: Extraction
1: Information management server (information management device)
1a-1c: Landing pages
2: Call receiving server (call receiving device)
3: Advertiser's server
3a: Advertiser's site (second Internet site)
4: Agent's server
4a: Management ID database
5a-5c: Advertisement providing servers (web servers)
6: User's computer
7: Advertiser's phone (first call receiver)
8: User's phone
9: Banner image
9a-9c: Advertisement information
11, 11a-11d: Identification information
11e: Other identification information
12a to 12c: Advertisement providing sites (first Internet sites)
13a: Advertisement frame
14, 14a-14c: Management IDs (management information)
14d: Management ID (new management information)
14p: MID (advertiser ID)
14q: DID (advertising agent ID)
14r: PID (merchandise ID)
14s: SID (advertisement providing site ID)
14t: UID (personal page ID)
15: CPU (computer)
15a: Script combining part
15b: Management ID acquisition part (management-information acquisition part)
15c: First determination part
15d: Second determination part
15e: Identification-information-association executing part
15f: Identification-information sending part
15g: Sending-status changing part
15h: Connection-status changing part
15j: Call-reception-information receiving part
15k: Period changing part
16: Memory device
17: Status information
17a: Sending-status information
17b: Connection-status information
18: Call-reception information
19: Input information
21: Script (index information)

## Claims

1. An information management method to manage identification information that is explicitly or implicitly provided in a web page and identifies a call receiver, the information management method comprising:
a step to change the status of said identification information rendered available for a call connection to a first call receiver from being available for sending to a web server hosting said web page into being unavailable for sending,
a step to change the status of said identification information rendered unavailable for said sending into being available for a call connection to a second call receiver; and
a step to change the status of said identification information rendered available for a call connection to the second call receiver into being available for sending to said web server or other web servers.

2. The information management method according to Claim 1, wherein the step to change the status of said identification information from being available for sending to said web server into being unavailable for sending is executed based on the establishment of a first predefined condition.

3. The information management method according to Claim 1, further comprising a step to change the status of the identification information into being unavailable for a call connection to said first call receiver after a predefined period has elapsed following the execution of the step to change the status of said identification information from being available for sending to said web server into being unavailable for sending.

4. The information management method according to Claim 3, wherein said predefined period is extended or reduced based on the establishment of a second predefined condition.

5. The information management method according to Claim 3, wherein a period unavailable for connection which is from the execution of the step to change the status of said identification information into being unavailable for a call connection to said first call receiver to the execution of the step to change the status into being available for a call connection to said second call receiver is extended or reduced based on the establishment of a third predefined condition.

6. An information management device for managing identification information that is explicitly or implicitly provided in a web page and identifies a call receiver, wherein the information management device:
changes the status of said identification information rendered available for a call connection to a first call receiver from being available for sending to the web server hosting said web page into being unavailable for sending,
changes the status of said identification information rendered unavailable for said sending into being available for a call connection to a second call receiver; and
changes the status of said identification information rendered available for a call connection to the second call receiver into being available for sending to said web server or other web servers.

7. The information management device according to Claim 6, further comprising:
a connection-status changing part that changes the status of said identification information into being unavailable for a call connection to said first call receiver, and changes the status of the identification information into being available for a call connection to said second call receiver,
a call-reception-information receiving part that receives call-reception information indicating that there was a call based on said identification information; and
a period changing part that, if receiving said call-reception information within a predefined period between changing the status of said identification information into being unavailable for said sending and changing the status into being unavailable for a call connection to said first call receiver, extends the predefined period, and if receiving said call-reception information within a period unavailable for connection between changing the status of said identification information into being unavailable for a call connection to said first call receiver and changing the status into being available for a call connection to said second call receiver, extends the period unavailable for connection.

8. An information management device comprising:
a management-information acquisition part for acquiring management information for identifying advertisement information provided in a web page from a web server hosting the web page,
a first determination part for determining whether identification information for identifying a call receiver and said acquired management information are mutually associated,
a second determination part for determining whether said identification information is available for provision to said web server; and
an identification-information sending part that sends said identification information to said web server if said identification information is mutually associated with said management information and available for said provision.

9. The information management device according to Claim 8, further comprising an identification-information-association executing part that, if said identification information and said management information are not mutually associated, associates the identification information with the management information.

10. The information management device according to Claim 8, further comprising an identification-information-association executing part that, if said identification information is unavailable for provision to said web server, associates other identification information different from said identification information with said management information.

11. An information management program for managing identification information that is explicitly or implicitly provided in a web page and identifies a call receiver, wherein the information management program causes a computer to fulfill functions to:
change the status of said identification information rendered available for a call connection to a first call receiver from being available for sending to the web server hosting said web page into being unavailable for sending,
change the status of said identification information rendered unavailable for said sending into being available for a call connection to a second call receiver; and
change the status of said identification information rendered available for a call connection to the second call receiver into being available for sending to said web server or other web servers.

12. An information management program that causes a computer to function as:
a management-information acquisition part for acquiring management information for identifying advertisement information provided in a web page from a web server hosting the web page,
a first determination part for determining whether identification information for identifying a call receiver and said acquired management information are mutually associated,
a second determination part for determining whether said identification information is available for provision to said web server; and
an identification-information sending part that sends said identification information to said web server if said identification information is mutually associated with said management information and available for said provision.

13. A call receiving device comprising:
a call receiving part that receives a call based on identification information that is explicitly or implicitly provided in a web page and is for identifying a call receiver,
a call-receiver-information receiving part that, if any call receiver is associated with the identification information, receives information of the call receiver, and if no call receiver is associated with said identification information, receives information indicating the absence of call receivers; and
a call connection part that, if said information of the call receiver is received, connects said call to the call receiver, and if said information indicating absence of call receivers is received, renders said call unconnected.
